# EUROPÄISCHE PATENTANMELDUNG

(11) **EP 1 262 758 A1**
(43) Veröffentlichungstag der Anmeldung: **04.12.2002**
(21) Anmeldenummer: 01112663.8
(22) Anmeldetag: 25.05.2001
(51) Int. Cl.: G01N 1/31, G01N 1/36

(54) **Behälter und Vorrichtung zur Gewebepräparation für die Gewebeeinbettung**

(71) Anmelder: Leica Mikrosysteme GmbH, 1170 Wien (AT)
(72) Erfinder: Zimmermann, Michael, 2333 Leopoldsdorf (AT); Lang, Anton, 1160 Wien (AT); Plank, Heinz, 2351 Wr. Neudorf (AT); Wogritsch, Rainer, 1230 Wien (AT)
(74) Vertreter: Reichert, Werner F., Dr.

(57) **Zusammenfassung**

Ein Behälter (2) zur Gewebeprepäration für die Gewebeeinbettung besteht aus einem Grundkörper (4), der aus einer zu einem Zylinder geformten Seitenwand (5), einem Boden (6) und mehreren Stegen (50) aufgebaut ist. Die Stege (50) unterteilen den Behälter (2) in mehrere Teilbehälter (52). Die Seitenwand (5) umfasst eine Vielzahl von axialen schlitzförmigen Öffnungen (12), die sich im Wesentlichen über die gesamte Höhe der Seitenwand (5) erstrecken.
Eine Vorrichtung (1) zur Gewebepräparation für die Gewebeeinbettung umfaßt einen Transportteller (15), auf dem eine Vielzahl van Behandlungsbehältern (17) anbrigbar sind. Ein Behälter (2) zur Gewebepräparation für die Gewebeeinbettung ist an einer Stange (62), die mit einem Halteelement (64) versehen ist, befestigbar. Das Halteelement (64) ist an einen Arm (27) der Vorrichtung einhängbar, der die Behälter (2) in den Behandlungsbehälten (17) auf- und abbewegt.

## Beschreibung

Die Erfindung betrifft einen Behälter zur Gewebepräparation für die Gewebeeinbettung und eine Vorrichtung zur Gewebepräparation für die Gewebeeinbettung.

Im besonderen betrifft die Erfindung einen Behälter zur Gewebepräparation für die Gewebeeinbettung bestehend aus einem Grundkörper, der aus einer zu einem Zylinder geformten Seitenwand, einem Boden und mehreren Stegen aufgebaut ist, wobei die Stege den Behälter in mehrere Teilbehälter unterteilen.

Ferner betrifft die Erfindung eine Vorrichtung zur Gewebepräparation für die Gewebeeinbettung mit einem Transportteller auf dem eine Vielzahl von eine Behandlungsflüssigkeit enthaltende Behandlungsbehälter anbringbar sind.

In dem US Patent 4,688,517 ist eine Vorrichtung zum Behandeln von Gewebeproben offenbart. Auf einem drehbaren Tisch ist eine Vielzahl von Behandlungsbehältern für die Probenvorbereitung vorgesehen. Der Tisch ist drehbar, so daß die Behandlungsbehälter zu einer Behandlungsstation verbracht werden können, an der die Gewebeproben nacheinander in verschieden Behandlungsflüssigkeiten eingetaucht werden. Zur geeigneten Temperierung der jeweils verwendeten Behandlungsflüssigkeiten ist eine Heiz- und Kühleinrichtung vorgesehen, die fest mit dem Gehäuse der Vorrichtung verbunden ist. Der Tisch ist nicht nur drehbar sondern auch in Richtung der Achse anhebbar und absenkbar. Die Behandlungsbehälter sind lediglich in den Aussparungen des Tisches eingerastet. Ein fester und definierter Sitz der Behandlungsbehälter auf dem Tisch ist nicht gegeben.

Der RMC™ und der LYNX™ Tissue Processer verwendet für die Gewebepräparation zur Gewebeeinbettung Behälter, die eine zylindrische Seitenwand besitzen, in der keine Öffnungen für den Austritt bzw. Eintritt der Behandlungsflüssigkeit vorgesehen sind. An der Seitenwand schließt sich ein konischer Teil an, der sich gegenüber dem Teil mit der zylindrischen Seitenwand verjüngt. Im konischen Teil der Seitenwand sind entsprechende längliche Öffnungen vorgesehen, die den Entritt und/oder den Austritt den Behandlungsflüssigkeit ermöglichen. Werden die Behälter gestapelt so ist jeder der Behälter mit einem Deckel zu versehen, um zu verhindern, dass die Gewebeteile während des Behandlungsprozesses aus den Behältern gespült werden. Die Verwendung von vielen Teilen bei der Vorbereitung der Proben für den Behandlungsprozess macht die Handhabung nicht einfach. Ferner besteht die Gefahr, dass Gewebeproben aus den Behälter gespült werden, wenn z.B. ein Deckel vergessen wird.

Eine Aufgabe der Erfindung ist es, einen Behälter zur Gewebepräparation für die Gewebeeinbettung anzugeben, der eine einfache Handhabung und dabei gleichzeitig eine gleichmäßige Umspülung der Gewebeproben durch die Behandlungsflüssigkeiten im Behandlungsbehälter ermöglicht. Ferner soll der Behälter den Übertrag der verschiedenen Behandlungsflüssigkeiten von einem Behandlungsbehälter zum nächsten Behandlungsbehälter minimieren.

Die objektive Aufgabe wird durch einen Behälter gelöst, der dadurch die Merkmale des kennzeichnenden Teil, des Anspruchs 1 gekennzeichnet ist.

Eine Aufgabe der Erfindung ist es, eine Vorrichtung zur Gewebepräparation für die Gewebeeinbettung anzugeben, die eine zuverlässige Gewebepräparation für die Gewebeeinbettung ermöglicht, wobei Übertrag der verschiedenen Behandlungsflüssigkeiten von einem Behandlungsbehälter zum nächsten Behandlungsbehälter minimiert ist.

Obige Aufgabe wird gelöst durch eine Vorrichtung mit den Merkmalen des kennzeichnenden Teils des Anspruchs 6.

Ein Vorteil der Erfindung ist es, durch die Ausgestaltung der Behälter in einer zylindrischen Form über dessen gesamten Höhe erreicht werden kann, dass beim Stapeln mehrerer Behälter der Boden eines Behälters den Deckel für einen darunter liegenden Behälter bildet. Dies ist von besonderen Vorteil, da beim Stapeln der Behälter mit einer minimalen Anzahl ein Teile hantiert werden muss. Ferner ist ausgeschlossen, dass Gewebeproben beim Behandlungsprozess aus den Behälter gespült werden, weil zufällig ein Deckel beim Stapeln vergessen worden ist.

Hinzu kommt, dass über gesamte Höhe der Seitenwand des Grundbehälters eine Vielzahl von axialen Öffnungen vorgesehen sind, die für einen ausreichenden Austausch der Behandlungsflüssigkeit sorgen, und dass dadurch der Übertrag der Behandlungsflüssigkeit von einem Behandlungsbehälter einer Vorrichtung zur Gewebepräparation für die Gewebeeinbettung erheblich minimieret wird.

Ferner ist der Grundkörper des Behälters mit einer Vielzahl von Stegen, die gleichverteilt angeordnet sind, und dass sie zum einen an der Seitenwand des Grundkörpers und zum anderen an einem zentralen Hohlzylinder enden, der zum Stapeln der Grundbehälter verwendet wird. Die Grundbehälter sind mittels eines Sicherungselements an einer Stange gesichert. Die Stange ist durch den zentralen Hohlzylinder geführt ist, wobei ein genaue Stapelposition der Grundbehälter festgelegt ist.

Bei der Verwendung nur eines Grundbehälters ist dieser mit einem Deckel verschließbar, wobei sowohl am Grundkörper als auch am Deckel eine Nut ausgebildet ist. Die Nut des Deckels und die Nut des Grundkörpers fluchten, wenn der Deckel auf dem Grundkörper angebracht ist und in entsprechender Weise ausgerichtet ist.

Einen zusätzlichen Vorteil bietet die Vorrichtung zur Gewebepräparation für die Gewebeeinbettung. Diese ist mit einem Transportteller versehen auf dem eine Vielzahl eine Behandlungsflüssigkeit enthaltende Behandlungsbehälter anbringbar sind. Mindestens ein Behälter zur Gewebepräparation für die Gewebeeinbettung ist an einer Stange, die mit einem Halteelement versehen ist, befestigbar. Das Halteelement ist in den Arm der Vorrichtung einhängbar ist. Der Arm ist durch eine geeignete Mechanik derart bewegbar, dass der Behälter mit der Gewebeprobe in der Behandlungsflüssigkeit im Behandlungsbehälter auf- und abbewegbar ist, um ein möglicht gleichmäßige Umspühlung der Gewebeprobe mit der Behandlungsflüssigkeit zu erreichen.

In der Zeichnung ist der Erfindungsgegenstand schematisch dargestellt und wird anhand der Figuren nachfolgend beschrieben. Dabei zeigen:
- Fig. 1: eine perspektivische Ansicht des Behälters zur Gewebepräparation für die Gewebeeinbettung,
- Fig. 2a: eine Draufsicht auf den Behälter zur Gewebepräparation für die Gewebeeinbettung, wobei der Deckel abgenommen ist,
- Fig. 2b: eine Draufsicht auf den Deckel für den Behälter zur Gewebepräparation,
- Fig. 2c: eine Seitenansicht des Behälters zur Gewebepräparation für die Gewebeeinbettung,
- Fig. 3: eine perspektivische Ansicht eines zu einem Stapel zusammengefügter Behälter zur Gewebepräparation für die Gewebeeinbettung,
- Fig. 4: eine perspektivische Ansicht der Vorrichtung zur Gewebepräparation für die Gewebeeinbettung;
- Fig. 5: eine perspektivische Teilansicht des Transporttellers zusammen mit Behandlungsbehältern zur Gewebepräparation;

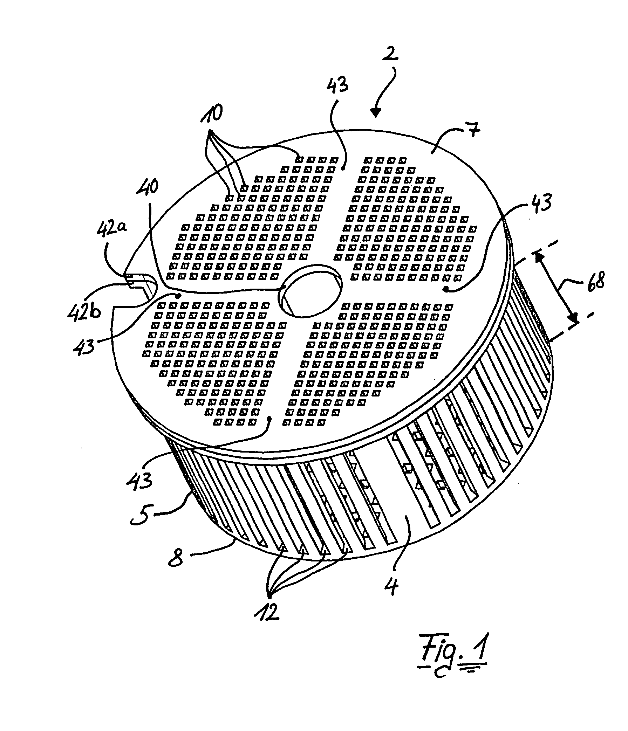

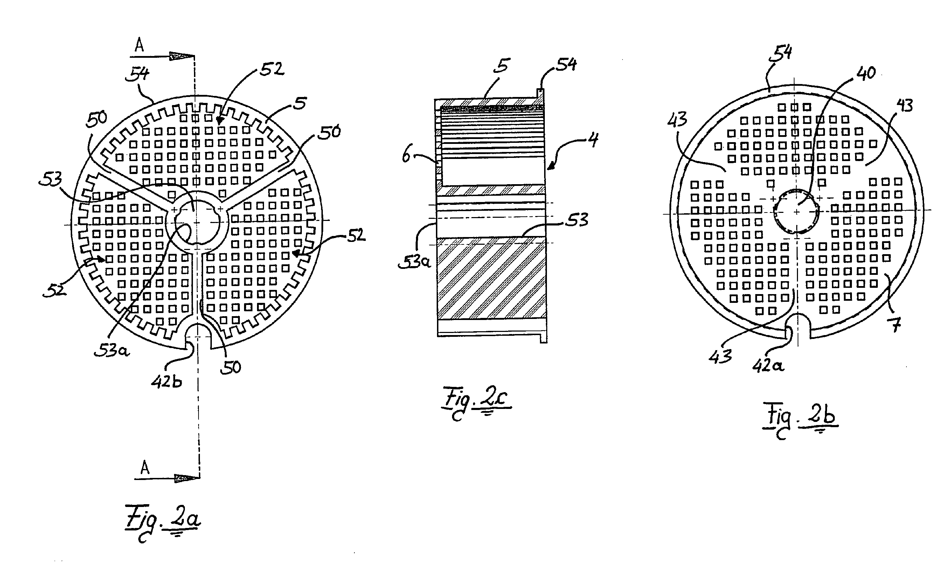

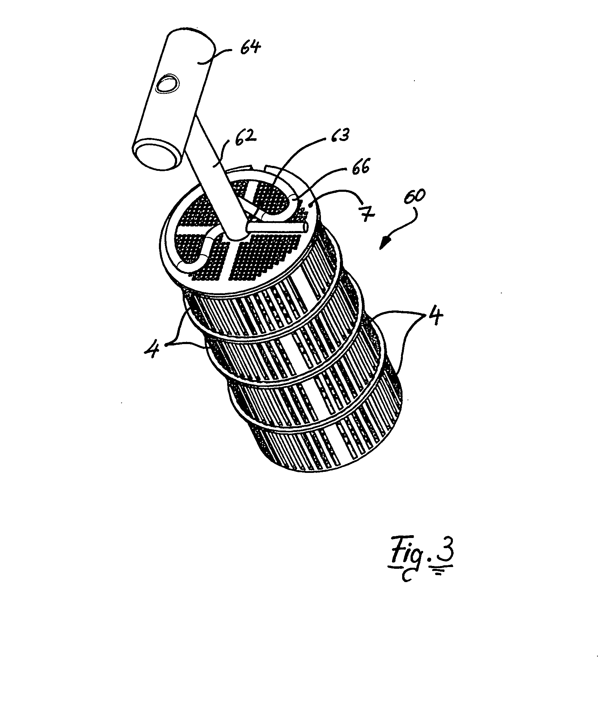

Fig. 1 zeigt einen Behälter 2 zur Gewebepräparation für die Gewebeeinbettung in perspektivischer Ansicht. Der Behälter 2 besteht aus einem zylindrischen nach oben offenen Grundkörper 4 mit einer Seitenwand 5 und einem Boden 6. Auf dem Grundkörper 4 kann ein lösbarer Deckel 7 angebracht werden. Ebenso wie der Deckel 7 so besitzt der Boden 7 eine Vielzahl von Öffnungen 10, die den Eintritt bzw. den Austritt der Behandlungsflüssigkeit unterstützen. Die Seitenwand 5 des Grundkörpers 4 besitzt eine Vielzahl von schlitzförmigen Öffnungen 12 in axialer Richtung des Behälters 2. Die schlitzförmigen Öffnungen 12 erstrecken sich im Wesenlichen über die gesamte Höhe 68 der zylindrischen Seitenwand 5. Die schlitzförmigen Öffnungen 12 in der Seitenwand 5 sind ebenfalls für einen gleichmäßigen, schnellen und fast vollständigen Austausch der Behandlungsflüssigkeit zuständig. Der Deckel 7 hat eine zentrale kreisförmige Öffnung 40, durch die, wie aus Fig. 3 ersichtlich ist, eine Stange zum Stapeln mehrerer Behälter 2 zu führen ist. Am Rand des Deckels 7 ist eine Nut 42a ausgeformt, die mit einer länglichen Nut 42b in axialer Richtung in der Seitenwand 5 des Grundkörpers 4 ausgebildet ist. Ferner hat der Deckel 7 mehrere vom Zentrum ausgehende Stege 43, die zur Formstabilität des Deckels 7 dienen. Ferner ist die Anzahl der Stege 43 auf dem Deckel 7 von der Anzahl der Stege 50 abhängig, die den von der Seitenwand 5 des Grundkörpers 4 umschlossenen Raum in mehrere Teilbehälter 52 (siehe Fig. 2a) unterteilt.

In dem in Fig. 2a dargestellten Ausführungsbeispiel ist der zylinderförmige Grundkörper 4 in drei gleiche Teilbehälter 52 unterteilt. Dabei endet einer der Stege 50 an der in der Seitenwand 5 des zylindrischen Grundkörper 4 ausgeformten Nut 42b. Somit ist eine eindeutige Zuordnung und Dokumentierung der in den Teilbehältern 52 eingebrachten Gewebeproben. Die Stege 50 enden zum einen an der Seitenwand 5 zum anderen an einem zentral im Grundkörper 4 ausgebildeten Hohlzylinder 53. Der Hohlzylinder hat eine zentrale Öffnung 53a ausgebildet. Am Grundkörper 4 ist ein umlaufender Rand 54 ausgeformt, der einen etwas größeren Durchmesser besitzt als die zylindrisch ausgeformte Seitenwand 5.

In Fig. 2b ist der Deckel 7 für den Grundkörper 4 dargestellt. Der Deckel 7 hat die Stege 43 derart vorgesehen, dass sie mit den Stegen 50 im Grundkörper 4 übereinstimmen. Der Deckel 7 wird auf den Grundkörper 4 derart aufgelegt, dass die Nut 42a in Deckel 7 mit der Nut 42b im Grundkörper 4 fluchtet. Damit sind die Stege 43 im Deckel 7 mit den Stegen 50 im Grundkörper 4 exakt übereinander angeordnet. Dies verhindert, dass die in den Teilbehältern 52 befindlichen Gewebeproben beim Präparationsprozeß nicht durch die Behandlungsflüssigkeit aus den Teilbehältern 52 gespült werden. Wie im Boden 6 des Grundkörpers 4 sind auch im Deckel 7 dazu Öffnungen 10 ausgebildet, um den Durchstrom der Behandlungsflüssigkeit zu gewährleisten und den Übertrag von Behandlungsflüssigkeit zu minimieren. Die Öffnung 40 im Deckel 7 fluchtet bei auf den Grundkörper 4 aufgelegten Deckel 7 mit der zentralen Öffnung 53a.

Ein Querschnitt durch den Grundkörper 4 ist in Fig. 2c dargestellt. Der Hohlzylinder 53 erstreckt sich in axialer Richtung durch den Grundkörper 4 und die zentrale Öffnung 53a ermöglicht einen Durchgriff durch den Grundkörper 4. Der Boden 6 des Grundkörpers 4 ist eben ausgestaltet. An der Seitenwand 5 ist der umlaufender Rand 54 ausgebildet, der, wie bereits oben erwähnt, einen größeren Durchmesser besitzt als der Grundkörper 4.

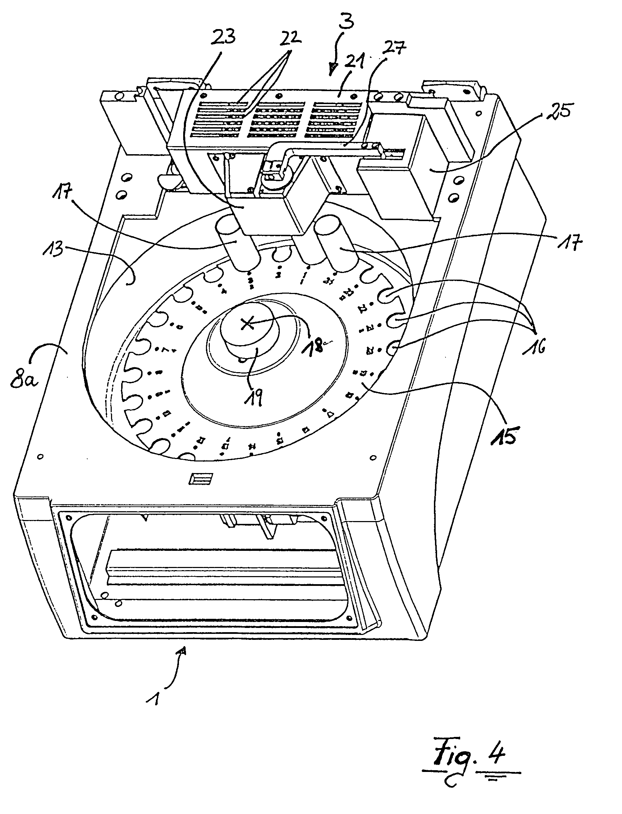

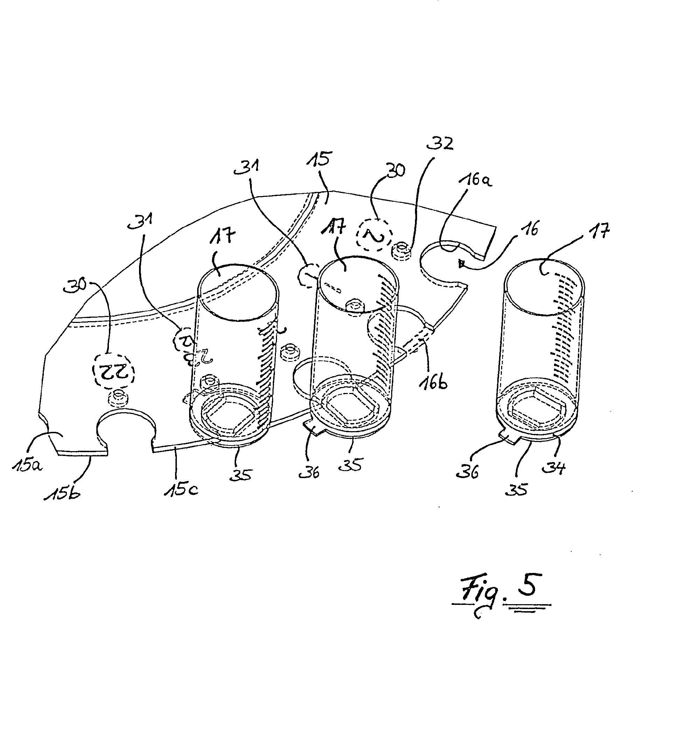

In Fig. 3 ist eine Möglichkeit dargestellt, mit der mehrere Grundkörper 4 zu einer Einheit 60 zusammengefasst werden. Diese Einheit 60 kann dann einer, wie Fig. 4 und Fig. 5 beschriebenen Vorrichtung 1, zur Präparation mit den Behandlungsflüssigkeiten zugeführt werden. In dem hier dargestellten Ausführungsbeispiel sind vier Grundkörper 4 zu einer Einheit 60 zusammengefasst. Die Zahl der Grundkörper 4 die eine Einheit 60 bilden ist lediglich eine Auswahl aus mehreren Möglichkeiten. Andere Kombinationen sind denkbar. Die Grundkörper 4 sind derart gestapelt übereinander angeordnet, dass der Boden 6 eines Grundkörpers 4 den Deckel für den im Stapel 60 darunter vorgesehenen Grundkörper 4 bildet. Der oberste Grundkörper 4 im Stapel 60 ist mit einem Deckel 7 abgedeckt. Orientiert und ausgerichtet sind die Grundkörper 4 und der Deckel 7 durch eine Stange 62, die durch den Hohlzylinder eines jeden Grundkörpers 4 bzw. durch die Öffnung 40 im Deckel 7 geführt ist. An der Stange ist sind mehrere Bohrungen 63 vorgesehen, die zur Aufnahme eines Sicherungselements 66 dienen. Die Bohrungen 63 sind derart entlang der Stange 62 verteilt, dass jederzeit eine beliebige Anzahl von Grundbehältern 4 zu einer Einheit 60 zusammengefasst werden können. An dem den Grundbehältern 4 abgewandten Ende der Stange 62 ist ein Halteelement angebracht, dass zum anbringen der Einheit 60 in der Vorrichtung 1 dient.

Fig. 4 zeigt eine perspektivische Ansicht einer Vorrichtung 1 zur Gewebepräparation für die Gewebeeinbettung ohne einen noch dafür vorgesehenen Deckel (nicht dargestellt). Das Gehäuse 5 hat eine innere Oberseite 8a ausgebildet, in der eine Aussparung 13 vorgesehen ist, durch die der Zugang ins Innere der Vorrichtung 1 ermöglicht ist. Durch die Aussparung 13 ist der Zugriff auf einen Transportteller 15, der im Innern der Gehäuses 5 angeordnet ist, möglich. Der Transportteller 15 ist in dieser Ausführungsform rund ausgestaltet und besitzt an seinem Rand eine Vielzahl von Aussparungen 16, die zur Aufnahme von Behandlungsbehältern 17 dienen. In die Behandlungsbehälter 17 werden die Behälter zur Gewebepräparation für die Gewebeeinbettung in die darin vorgesehenen Behandlungsflüssigkeiten getaucht. Auf den Transportteller 15 können Behandlungsbehälter 17 unterschiedlicher Größe aufgesetzt werden, so dass auch Behälter unterschiedlicher Größe verwendet werden können. Je nach mikroskopischer Untersuchungsmethode müssen Gewebestücke unterschiedlicher Größe präpariert werden.

Der Transportteller 15 ist um eine Achse 18 frei drehbar und kann zusätzlich in axialer Richtung der Achse 18 angehoben und abgesenkt werden. Der Transportteller 15 ist mittels eines Sicherungselements 19 gesichert. Mit dem Gehäuse 5 ist eine Heiz- und Kühleinrichtung 3 verbunden. Die Heiz- und Kühleinrichtung 3 besteht aus einer Stromversorgung 21, die mit mehreren Lüftungsschlitzen 22 versehen ist, um die erzeugte Wärme abzutransportieren. Mit der Stromversorgung 21 ist eine Aufnahme 23 für die Behandlungsbehälter 17 verbunden, die derart angeordnet ist, dass sie zumindest teilweise in den Bereich der Aussparung 13 hineinragt. Wie bereits oben erwähnt kann der Transportteller 15 in Richtung der Achse 18 angehoben und abgesenkt werden. Im angehobenen Zustand befindet sich zumindest ein Behandlungsbehälter 17 in der Aufnahme 23 und kann in entsprechender Weise temperiert werden. In den Behandlungsbehältern befinden sich unterschiedliche Flüssigkeiten, die zur Präparation der Gewebeproben notwendig sind. Neben der Heiz- und Kühleinrichtung 3 ist eine Mechanik 25 vorgesehen mit der ein Arm 27 verbunden ist. An dem Arm 27 sind ein oder mehrere Behälter mit jeweils einer Gewebeprobe angebracht, wobei die Behälter einem entsprechenden Gewebepräparationsprogramm unterzogen werden. Der Arm 27 kann sich auf und ab bewegen, wodurch der Behälter zusammen mit der Gewebeprobe in die Behandlungsflüssigkeit getaucht wird, die sich im dem Behandlungsbehälter 17 befindet, der sich gerade in der Aufnahme 23 befindet.

Eine Teilansicht des Transporttellers 15 ist in Fig. 2 dargestellt. Dabei ist ebenso das zusammenwirken des Behandlungsbehälters 17 mit dem Transportteller 15 wiedergegeben. Der Transportteller 15 besitzt eine Oberseite 15a und eine Unterseite 15b. Auf der Oberseite 15a des Transportteller 15 ist unmittelbar gegenüber den Aussparungen 16 ein erster Nummernsatz 30 vorgesehen. Ein zweiter Nummernsatz 31 ist ebenfalls derart auf der Oberseite 15a des Transporttellers 15 angebracht, dass eine Nummer nur jeder zweiten Aussparung 16 zugeordnet ist. Dabei gilt der erste Nummernsatz 30 für die kleinen Behandlungsbehälter 17a (wie auch in Fig.2 gezeigt) und der zweite Nummernsatz 31 gilt für die großen Behandlungsbehälter 17b. Zwischen dem ersten Nummernsatz 30 und der Aussparung 16 ist eine Prägung 32 im Transportteller 15 angebracht, die auf der Unterseite 15b des Transporttellers 15 eine Erhöhung ausbildet. Die Aussparung 16 besteht aus einem kreisförmigen Ausschnitt 16a, der am Rand 15c des Transporttellers eine Öffnung 16b besitzt, die kleiner als der Durchmesser der Aussparung 16 ist. Die Behandlungsbehälter 17 sind vorzugsweise zylinderförmig ausgebildet und besitzen am Boden 33 eine umlaufende Einkerbung 34, die in etwa die Dicke des Randes 15c des Transporttellers 15 besitzt. Die Einkerbung 34 ist an der dem Boden 33 gegenüberliegenden Seite ebenfalls durch eine kreisrunde Scheibe 35 abgeschlossen. An der kreisrunden Scheibe 35 ist eine Nase 36 ausgeformt, die mit der Prägung 32 an der Unterseite 15b des Transporttellers 15 zusammenwirkt.

Die Erfindung wurde in bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Vorrichtung
- 2: Behälter
- 3: Heiz- und Kühleinrichtung
- 4: zylindrischer Grundkörper
- 5: Seitenwand
- 6: Boden
- 7: lösbarer Deckel
- 8a: innere Oberseite
- 10: Vielzahl von Öffnungen
- 12: schlitzförmige Öffnung
- 13: Aussparung
- 15: Transportteller
- 15a: Oberseite
- 15b: Unterseite
- 15c: Rand
- 16: Aussparung
- 16a: kreisförmigen Ausschnitt
- 16b: Öffnung
- 17: Behandlungsbehälter
- 18: Achse
- 19: Sicherungselement
- 21: Stromversorgung
- 22: Lüftungsschlitze
- 23: Aufnahme
- 25: Mechanik
- 27: Arm
- 30: erster Nummernsatz
- 31: zweiter Nummernsatz
- 34: umlaufende Einkerbung
- 35: kreisrunde Scheibe
- 36: Nase
- 40: kreisförmige Öffnung
- 42a: Nut
- 42b: längliche Nut
- 43: Steg im Deckel
- 50: Steg im Grundkörper
- 52: Teilbehälter
- 53: Hohlzylinder
- 53a: zentrale Öffnung
- 54: umlaufender Rand
- 60: Einheit
- 62: Stange
- 63: Bohrung
- 64: Halteelement
- 66: Sicherungselement
- 68: Höhe der Seitenwand

## Patentansprüche

1. Behälter (2) zur Gewebepräparation für die Gewebeeinbettung bestehend aus einem Grundkörper (4), der aus einer zu einem Zylinder geformten Seitenwand (5), einem Boden (6) und mehreren Stegen (50) aufgebaut ist, wobei die Stege (50) den Behälter (2) in mehrere Teilbehälter (52) unterteilen, **dadurch gekennzeichnet, dass** die Seitenwand (5) eine Vielzahl von axialen schlitzförmigen Öffnungen (12) aufweist, die sich im Wesentlichen über die gesamte Höhe (68) der Seitenwand (5) erstrecken.

2. Behälter nach Anspruch 1, **dadurch gekennzeichnet, dass** im Grundkörper (4) die Stege (50) gleichverteilt angeordnet sind, und dass sie zum einen an der Seitenwand (5) des Grundkörpers (4) und zum anderen an einem zentralen Hohlzylinder (53) enden.

3. Behälter nach Anspruch 1, **dadurch gekennzeichnet, dass** der Grundkörper (4) mit einem Deckel (7) verschließbar ist, wobei sowohl am Grundkörper (4) als auch am Deckel (7) eine Nut (42b und 42a) ausgebildet ist, und dass die Nut (42a) des Deckels (7) und die Nut (42b) des Grundkörpers (4) fluchten, wenn der Deckel (7) auf dem Grundkörper (4) angebracht ist.

4. Behälter nach Anspruch 1, **dadurch gekennzeichnet, dass** mehrere Grundkörper (4) zu einem Stapel (60) zusammenstellbar sind, wobei der oberste Grundkörper mit einem Deckel (7) verschlossen ist, dass der Boden eines Grundkörpers (4) für jeden darunter liegenden Grundkörper (4) den Deckel darstellt, und dass die Grundkörper (4) entlang der Nut (42b) in der Seitenwand (5) des Grundkörpers (4) ausgerichtet sind.

5. Behälter nach Anspruch 4, **dadurch gekennzeichnet, dass** der Stapel (60) mittels einer Stange (62) fixiert ist, die durch den zentralen Hohlzylinder (53) geführt ist, wobei ein genaue Stapelposition der Grundbehälter (4) festgelegt ist.

6. Vorrichtung (1) zur Gewebepräparation für die Gewebeeinbettung mit einem Transportteller (15) auf dem eine Vielzahl von eine Behandlungsflüssigkeit enthaltende Behandlungsbehälter (17) anbringbar sind **dadurch gekennzeichnet, dass** mindestens ein Behälter (2) zur Gewebepräparation für die Gewebeeinbettung an einer Stange (62), die mit einem Halteelement (64) versehen ist, befestigbar ist, und dass das Halteelement (64) einem Arm (27) der Vorrichtung einhängbar ist, der die Behälter (2) in den Behandlungsbehälter auf- und abbewegt.

7. Vorrichtung (1) nach Anspruch 6 **dadurch gekennzeichnet, dass** der Behälter (2) aus einem Grundkörper (4), der aus einer zu einem Zylinder geformten Seitenwand (5), einem Boden (6) und mehreren Stegen (50) besteht, wobei die Stege (50) den Behälter (2) in mehrere Teilbehälter (52) unterteilt, und dass die Seitenwand (5) eine Vielzahl von axialen schlitzförmigen Öffnungen (12) aufweist, die sich im Wesentlichen über die gesamte Höhe (68) der Seitenwand (5) erstrecken.

8. Vorrichtung (1) nach Anspruch 6, **dadurch gekennzeichnet, dass** im Grundkörper (4) die Stege (50) gleichverteilt angeordnet sind, und dass sie zum einen an der Seitenwand (5) des Grundkörpers (4) und zum anderen an einem zentralen Hohlzylinder (53) enden.

9. Vorrichtung (1) nach Anspruch 6, **dadurch gekennzeichnet, dass** der Grundkörper (4) mit einem Deckel (7) verschließbar ist, wobei sowohl am Grundkörper (4) als auch am Deckel (7) eine Nut ausgebildet ist, und dass bei auf den Grundkörper (4) angebrachten Deckel (7) die Nut (42a) des Deckels (7) und die Nut (42b) des Grundkörpers (4) fluchten.

10. Vorrichtung (1) nach Anspruch 6, **dadurch gekennzeichnet, dass** mehrere Grundkörper (4) zu einem Stapel (60) zusammenstellbar sind, mittels der Stange (62) fixiert sind, die durch den zentralen Hohlzylinder (53) geführt ist, wobei ein genaue Stapelposition der Grundbehälter (4) festgelegt ist und der oberste Grundkörper (4) mit einem Deckel (7) verschlossen ist, dass der Boden eines Grundkörpers (4) für jeden darunter liegenden Grundkörper (4) den Deckel darstellt, und dass die Grundkörper (4) entlang der Nut (42b) in der Seitenwand (5) des Grundkörpers (4) ausgerichtet sind.
